# FASCICULE DE BREVET EUROPEEN

(11) **EP 1 026 025 B1**
(45) Date de publication et mention de la délivrance du brevet: **18.06.2003**
(21) Numéro de dépôt: 00400239.0
(22) Date de dépôt: 31.01.2000
(51) Int. Cl.: B60K 17/356, B60K 17/10, F16H 39/02

(54) **Dispositif de transmission d'un engin mobile ayant au moins deux organes de déplacement moteurs en ligne**
Übertragungsvorrichtung für bewegliche Maschine mit mindestens zwei hintereinandergeschalteten Verdrängermotoren
Transmission device for mobile engine with at least two serially arranged displacement motors

(30) Priorité: 05.02.1999 FR 9901361
(43) Date de publication de la demande: 09.08.2000
(73) Titulaire: POCLAIN HYDRAULICS INDUSTRIE, 60411 Verberie (FR)
(72) Inventeur: Martin, Louis, 60200 Compiègne (FR); Cousin, Jean-Claude, 60700 Pontpoint (FR)
(74) Mandataire: Intès, Didier Gérard André

(56) Documents cités:
- EP-A- 0 176 427
- EP-A- 0 547 947
- EP-A- 0 816 153
- FR-A- 2 719 001
- US-A- 5 328 321

## Description

La présente invention concerne un dispositif de transmission pour deux organes de déplacement d'un engin disposés l'un à la suite de l'autre dans le sens de déplacement dudit engin, le dispositif comprenant une pompe hydraulique ainsi qu'un premier et un deuxième moteur hydraulique, auxquels sont respectivement attelés les premier et deuxième organes de déplacement, lesdits moteurs hydrauliques étant des moteurs doubles qui comprennent chacun deux moteurs élémentaires, chaque moteur élémentaire ayant un premier et un deuxième raccord élémentaire, d'alimentation ou d'échappement, les premiers raccords élémentaires étant mis en commun pour former un premier raccord principal du moteur double, tandis que les deuxièmes raccords élémentaires sont séparés et forment respectivement des deuxième et troisième raccords principaux du moteur double, le premier raccord principal du premier moteur hydraulique étant raccordé à une conduite d'alimentation en fluide provenant de la pompe et le premier raccord principal du deuxième moteur hydraulique étant raccordé à une conduite de retour de fluide, les deuxièmes raccords principaux des premier et deuxième moteurs hydrauliques étant reliés entre eux par une conduite de raccordement.

L'invention s'applique par exemple à des engins à transmission hydraulique ayant deux organes de déplacement disposés en ligne, dont l'un est directeur. Il s'agit par exemple d'un compacteur tandem, dont les organes de déplacement sont constitués par des rouleaux.

Comme on le verra dans la suite, l'invention s'applique également à des engins ayant deux groupes de deux organes de déplacement, disposés en ligne de chaque côté du véhicule. Il s'agit par exemple d'engins agricoles à quatre roues motrices tels qu'une moissonneuse-batteuse.

On connaît, par la demande de brevet EP 0 176 427, des moteurs doubles à trois orifices, dont la demande EP 0 547 947 fait application dans un engin à trois ou à quatre roues motrices.

FR 2 719 001, qui sert de base à la présentation en deux parties de la revendication 1, l'utilisation de moteurs doubles à trois orifices pour l'entraînement d'un engin tracteur à trois roues motrices. Un sélecteur à deux positions est raccordé à la conduite d'alimentation en fluide, à la conduite de retour de fluide et au troisième raccord principal du deuxième moteur hydraulique.

L'invention vise à améliorer les dispositifs connus pour doter l'engin d'au moins deux gammes de vitesse en translation, tout en continuant d'assurer une synchronisation des organes de déplacement, disposés l'un à la suite de l'autre et entraînés par les premier et deuxième moteurs hydrauliques afin d'éviter leur patinage.

Ce but est atteint grâce au fait que le troisième raccord principal du premier moteur hydraulique est relié soit au sélecteur, soit directement à la même conduite que le premier raccord principal du deuxième moteur et au fait que le sélecteur a une position de travail dans laquelle les deux moteurs hydrauliques présentent, considérés ensemble vis-à-vis de leur alimentation en fluide par la pompe, une première cylindrée totale, et une position de vitesse dans laquelle les deux moteurs hydrauliques présentent, considérés ensemble vis-à-vis de leur alimentation en fluide par la pompe, une deuxième cylindrée totale inférieure à ladite première cylindrée.

On sait que, lorsque deux moteurs sont alimentés en série, ils présentent, vis-à-vis de leur alimentation en fluide, une même cylindrée égale à la cylindrée de l'un de ces deux moteurs. En revanche, lorsque les mêmes moteurs sont alimentés en parallèle, ils présentent, vis-à-vis de leur alimentation par la pompe, une cylindrée plus importante, égale à la somme de leurs cylindrées respectives. Quand la cylindrée est élevée, le couple d'entraînement délivré par les moteurs est également élevé, ce qui permet de faire circuler l'engin dans des conditions difficiles, par exemple sur un terrain de chantier glissant. En revanche, lorsque la cylindrée est faible, le couple d'entraînement délivré par les moteurs est plus faible, l'engin peut donc être animé d'une vitesse de déplacement rapide, dans des conditions différentes de ses conditions de travail.

Le sélecteur du dispositif selon l'invention permet, selon qu'il occupe l'une ou l'autre de ses positions, de placer certains des moteurs élémentaires des deux moteurs doubles en série ou en parallèle, ce qui, pour les raisons indiquées ci-dessus, permet l'obtention de plusieurs gammes de vitesse.

On peut envisager trois principaux types de configurations, à savoir une configuration de travail, une configuration de moyenne vitesse et une configuration de grande vitesse.

Dans la configuration de travail, le troisième raccord principal du premier moteur est raccordé à la conduite de retour de fluide tandis que le troisième raccord principal du deuxième moteur est raccordé à la conduite d'alimentation en fluide.

Dans la configuration de moyenne vitesse, le troisième raccord principal du premier moteur est raccordé au troisième raccord principal du deuxième moteur.

Dans la configuration de grande vitesse, le troisième raccord principal du premier moteur est raccordé à la conduite d'alimentation en fluide, tandis que le troisième raccord principal du deuxième moteur est raccordé à la conduite de retour de fluide.

Le sélecteur du dispositif de l'invention comporte alors au moins deux positions correspondant respectivement à l'une des configurations indiquées ci-dessus et à une autre desdites configurations.

Dans la configuration de travail comme dans la configuration de grande vitesse, les deuxièmes raccords principaux des premier et deuxième moteurs hydrauliques communiquent entre eux. En d'autres termes, les premiers moteurs élémentaires de chacun des deux moteurs hydrauliques sont disposés en série, de sorte que les organes de déplacement sont synchronisés.

Dans la configuration de travail, les deuxièmes moteurs élémentaires sont raccordés en parallèle par rapport au circuit série des premiers moteurs élémentaires. Par conséquent, vis-à-vis de leur alimentation en fluide par la pompe, les deux moteurs présentent une cylindrée totale égale à la somme de la cylindrée du premier moteur alimenté en premier par la pompe, et de la cylindrée du deuxième moteur élémentaire du deuxième moteur également alimenté par la pompe.

Dans la configuration de moyenne vitesse, les premier et deuxième moteurs élémentaires du deuxième moteur hydraulique sont respectivement reliés en série au premier et au deuxième moteur élémentaire du premier moteur hydraulique. Par conséquent, la cylindrée totale que présentent les deux moteurs vis-à-vis de leur alimentation en fluide par la pompe est égale à la cylindrée complète du premier moteur hydraulique, c'est-à-dire à la somme des cylindrées des deux moteurs élémentaires de ce premier moteur hydraulique.

Dans la configuration de grande vitesse, les deuxièmes moteurs élémentaires de chacun des deux moteurs hydrauliques sont inactivés puisque leurs deux raccords (premier raccord principal et deuxième raccord élémentaire) sont reliés à la même conduite, c'est-à-dire à la conduite d'alimentation en fluide pour le premier moteur hydraulique et à la conduite de retour de fluide pour le deuxième moteur hydraulique. La cylindrée totale que présentent les deux moteurs hydrauliques vis-à-vis de leur alimentation en fluide par la pompe est égale à la cylindrée du premier moteur élémentaire du premier moteur hydraulique qui est alimenté en premier par la pompe, le premier moteur élémentaire du deuxième moteur hydraulique étant disposé en série.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 montre un dispositif conforme à l'invention, appliqué à deux organes de déplacement disposés en ligne d'un engin, dans la position de travail du sélecteur ;
- les figures 2 et 3 montrent le dispositif de la figure 1, respectivement dans une position de grande vitesse et dans une position de moyenne vitesse ;
- la figure 4 montre schématiquement le dispositif de l'invention appliqué à un engin à quatre roues motrices disposées deux par deux de chaque côté du véhicule ;
- la figure 5 montre un dispositif analogue à celui de la figure 4 équipé, en outre, d'un diviseur de débit ;
- la figure 6 montre le dispositif de l'invention appliqué à un véhicule à quatre roues motrices selon un autre mode de réalisation ; et
- la figure 7 montre une variante du dispositif des figures 1 à 3, pour un autre type de sélecteur.

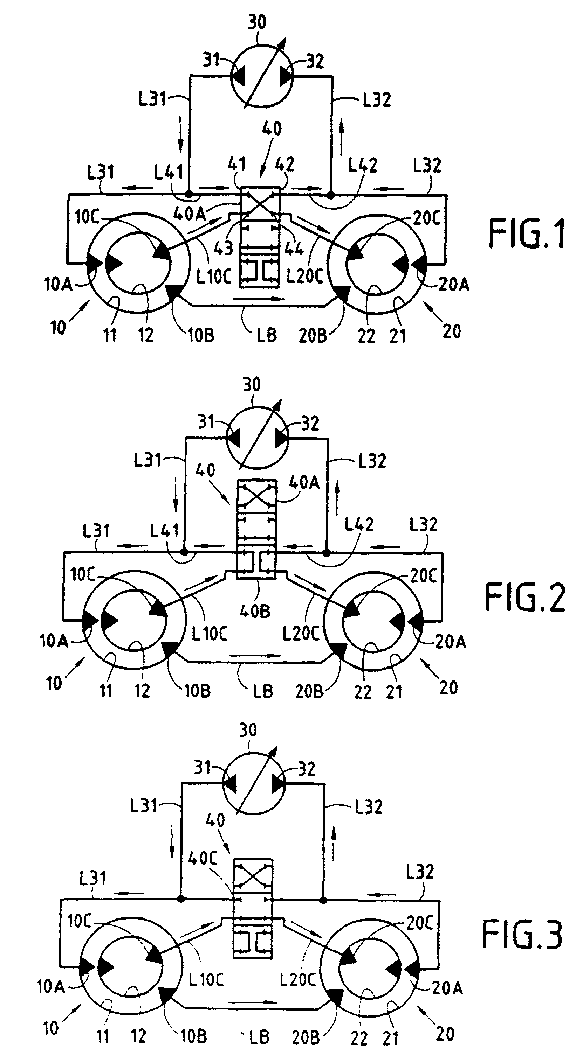

Le circuit de la figure 1 comporte un premier et un deuxième moteur hydraulique 10, 20, destinés à entraîner les organes de déplacement disposés en ligne d'un engin à transmission hydrostatique. Il s'agit de moteurs doubles comprenant chacun un premier et un deuxième moteur élémentaire, respectivement 11 et 12 pour le moteur 10, et 21 et 22 pour le moteur 20.

Pour chaque moteur double, les premiers raccords élémentaires des moteurs élémentaires sont mis en commun pour former un premier raccord principal, respectivement 10A pour le moteur 10 et 20A pour le moteur 20. Pour chaque moteur double, les deuxièmes raccords élémentaires des moteurs élémentaires sont séparés et forment donc respectivement les deuxièmes et troisièmes raccords principaux du moteur double, respectivement 10B et 10C pour le moteur 10, et 20B et 20C pour le moteur 20.

Le premier raccord principal 10A du moteur 10 est raccordé à une conduite d'alimentation en fluide L31 provenant de la pompe 30, tandis que le premier raccord principal 20A du moteur 20 est raccordé à une ligne de retour de fluide L32.

Le circuit représenté à titre d'exemple sur la figure 1 est un circuit fermé, la pompe 30 étant à débit variable et comportant deux orifices, 31 et 32, respectivement pour le refoulement et pour l'aspiration du fluide. La ligne L31 est raccordée à l'orifice 31, tandis que la ligne L32 est raccordée à l'orifice 32. Il faut toutefois noter que le dispositif peut également trouver une application dans le cas des circuits ouverts, avec une pompe ayant un seul orifice de refoulement, auquel cas la conduite de retour de fluide serait raccordée à un réservoir sans pression. Sur les figures 1 à 3, le sens de circulation du fluide en marche avant est indiqué par des flèches.

Les deuxièmes raccords principaux 10B et 20B des moteurs 10 et 20 sont reliés entre eux par une ligne de raccordement LB. Le dispositif comporte un sélecteur 40 qui, dans l'exemple représenté, comporte quatre voies, respectivement 41, 42, 43 et 44. La première voie 41 est reliée à la conduite d'alimentation en fluide L31 par une conduite secondaire de liaison L41. La deuxième voie 42 est reliée à la conduite de retour de fluide L32 par une conduite secondaire de liaison L42. La troisième voie 43 est reliée au troisième raccord principal du moteur 10 par une conduite de liaison L10C, tandis que la quatrième voie 44 est reliée au troisième raccord principal 20C du moteur 20 par une conduite de liaison L20C. Ainsi, dans l'exemple représenté sur les figures 1 à 3, le sélecteur comporte quatre voies qui permettent de le relier respectivement à la conduite d'alimentation en fluide, à la conduite de retour de fluide, au troisième raccord principal du premier moteur hydraulique et au troisième raccord principal du deuxième moteur hydraulique. On verra toutefois dans la suite qu'il est possible d'utiliser un sélecteur à trois voies, permettant de le relier respectivement à la conduite d'alimentation en fluide, à la conduite de retour de fluide et au troisième raccord principal de l'un des moteurs hydrauliques.

La figure 1 montre le sélecteur 40 dans sa position de travail, dans laquelle le troisième raccord principal 10C du moteur 10 est raccordé à la conduite de retour de fluide L32, par la liaison des voies 42 et 43 du sélecteur, tandis que le troisième raccord principal 20C du moteur 20 est raccordé à la conduite d'alimentation en fluide L31 par la liaison des première et quatrième voies 41 et 44 du sélecteur. Ainsi, le deuxième moteur élémentaire du moteur 10 est directement relié à chacun des deux orifices de la pompe, respectivement par le raccord principal 10A et par le raccord principal 10C, de même que le deuxième moteur élémentaire du moteur 20, respectivement par les raccords 20C et 20A. En d'autres termes, les deuxièmes moteurs élémentaires des moteurs 10 et 20 sont alimentés en parallèle. En revanche, le fluide passant par le raccord 10B du moteur 10 passe par le raccord 20B du moteur 20, de sorte que les premiers moteurs élémentaires sont disposés en série. Ainsi, par la conduite L31, la pompe alimente simultanément les deux moteurs élémentaires du moteur 10, et le deuxième moteur élémentaire du moteur 20. La cylindrée alimentée par la pompe est donc égale à la somme de la cylindrée totale du moteur 10 et de la cylindrée du deuxième moteur élémentaire du moteur 20. Un couple important est donc disponible, et l'engin peut être utilisé dans les conditions de travail. Si l'on considère que tous les moteurs élémentaires ont la même cylindrée, le débit refoulé par l'orifice 31 de la pompe se partage à raison de deux tiers pour le moteur 10 et du tiers restant pour le deuxième moteur élémentaire du moteur 20. La position de travail du sélecteur 40 est indiquée par la référence 40A sur la figure 1.

Le sélecteur 40 comporte en outre au moins une deuxième position dans laquelle la cylindrée totale alimentée par la pompe est inférieure à la cylindrée alimentée par la ligne L31 sur la figure 1. La figure 2 montre par exemple le sélecteur occupant une deuxième position 40B, dite position de grande vitesse. Dans cette position, le troisième raccord principal 10C du moteur 10 est raccordé à la ligne d'alimentation en fluide L31 par la liaison des voies 41 et 43 du sélecteur qui relie les conduites L10C et L41. Dans la mesure où le premier raccord principal 10A du moteur 10 est également raccordé à la conduite d'alimentation en fluide, le deuxième moteur élémentaire du moteur 10 est ainsi inactivé. Seul le premier moteur élémentaire reste actif, les raccords 10A et 10B étant soumis à des pressions différentes.

De son côté, le troisième raccord principal 20C du moteur 20 est relié à la conduite de retour de fluide L32 par la liaison des voies 42 et 44 du sélecteur qui raccorde les conduites L20C et L42. Le deuxième moteur élémentaire du moteur 20 est ainsi inactivé, puisque ses deux raccords 20A et 20C sont placés à la même pression. En revanche, le premier moteur élémentaire du moteur 20 est activé en étant normalement raccordé en série avec le premier moteur élémentaire du moteur 10. Dans ce cas, la cylindrée totale alimentée par la conduite L31 est égale à la seule cylindrée du premier moteur élémentaire du moteur 10, elle-même égale à la cylindrée du premier moteur élémentaire du moteur 20, puisque ces deux moteurs élémentaires sont disposés en série. La cylindrée est donc minimale, et l'engin peut circuler dans une gamme de vitesse élevée, tandis qu'il ne peut pas fournir un couple de travail important.

Dans l'exemple représenté, le sélecteur comporte encore une troisième position 40C visible sur la figure 3. Dans cette position, les voies 41 et 42 sont isolées, tandis que les voies 43 et 44 sont reliées entre elles, de sorte que les troisièmes raccords principaux 10C et 20C des moteurs 10 et 20 sont raccordés, en étant isolés des autres raccords principaux des moteurs. De ce fait, tout le fluide refoulé par les raccords 10B et 10C du moteur 10 alimente les orifices 20B et 20C du moteur 20, de sorte que le moteur 20 est entièrement disposé en série avec le moteur 10. Dans ce cas, la cylindrée totale alimentée par l'orifice 31 de la pompe est égale à la cylindrée totale du moteur 10, l'intégralité du fluide refoulé passant par le raccord 10A.

Si l'on considère que chaque moteur élémentaire a une cylindrée C, les cylindrées totales raccordées à la conduite d'alimentation L31 dans les figures 1, 2 et 3 sont respectivement égales à 3C, à C et à 2C. Bien entendu, les organes de déplacement du véhicule doivent avoir la même vitesse de déplacement linéaire. Ainsi, il est avantageux que les deux moteurs hydrauliques présentent des cylindrées sensiblement égales et soient aptes à entraîner à la même vitesse des organes de déplacement présentant sensiblement le même développement (pour un débit donné de fluide dans les moteurs, la distance parcourue par les organes de déplacement est la même, le développement d'un organe de déplacement étant la distance qu'il parcourt en effectuant une rotation d'un tour). On peut également utiliser le dispositif de l'invention sur des véhicules dont les organes de déplacement auraient des développements différents, auquel cas le rapport de développement serait pris en compte pour déterminer les cylindrées respectives de chacun des moteurs.

Avantageusement, le dispositif comporte des moyens pour respecter une limite inférieure et une limite supérieure de pression dans la conduite de raccordement LB entre les deuxièmes raccords principaux 10B ct 20B des premier et deuxième moteurs 10 et 20. De manière connue en soi, ces moyens peuvent comporter une soupape de surpression et un clapet de gavage raccordés à une pompe de gavage. Ces éléments étant connus, ils ne sont pas représentés sur le circuit des figures 1 à 3 qui est schématique. De cette manière, avec les mêmes moyens comprenant par exemple une seule soupape de surpression et un seul clapet de gavage, judicieusement placés sur la conduite de raccordement, on protège à la fois les moteurs 10 et 20 contre les surpressions et contre les phénomènes de cavitation.

D'autres éléments connus, par exemple dans la demande EP 0 547 947, ne sont pas décrits ici, mais peuvent être avantageusement utilisés, comme un distributeur à ouverture progressive placé entre la conduite LB et l'une des conduites L31 ou L32, permettant, en situation de virage, d'avoir une vitesse différente sur les moteurs 10 et 20.

Egalement, un engin à quatre roues motrices ou plus peut utiliser avantageusement deux circuits conformes à la description précédente, chacun des circuits alimentant les roues d'un côté de cet engin.

Dans ce cas, les pompes des deux circuits peuvent être commandées simultanément, en particulier lorsque l'engin circule sur route en ligne droite. Toutefois, le dispositif peut comprendre des moyens de gestion de la commande des cylindrées des pompes capables de désaccoupler les commandes des deux pompes dans certaines situations, par exemple dans un virage serré où l'on souhaite obtenir, dans le circuit situé du côté extérieur à l'engin, une pression supérieure à celle qui règne dans le circuit situé du côté intérieur.

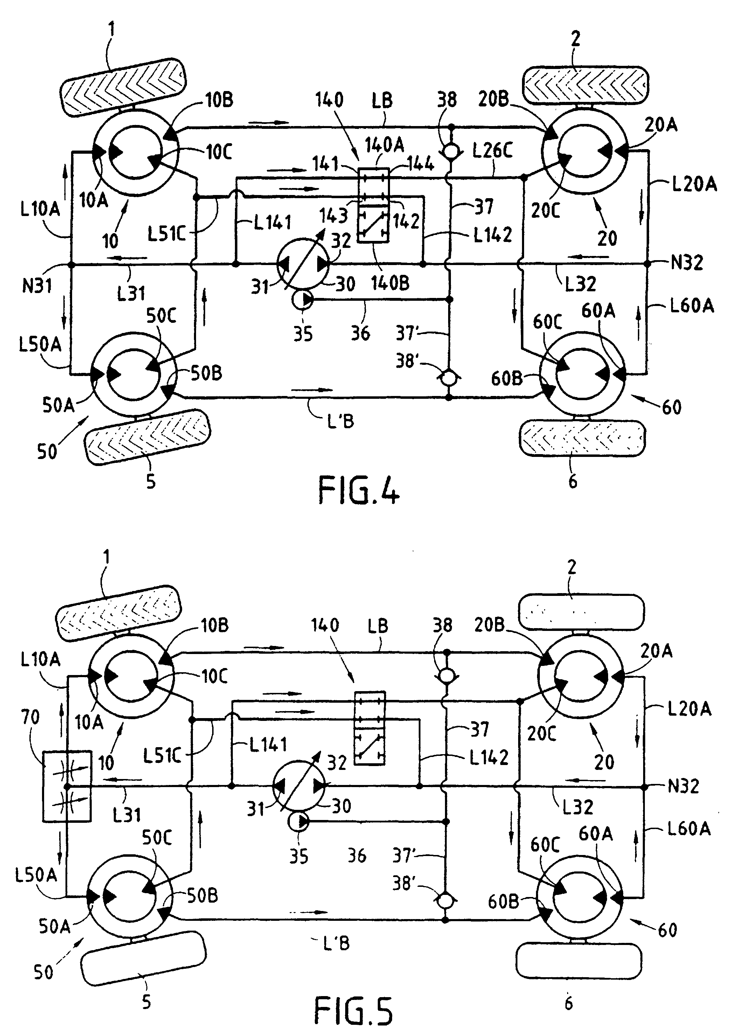

On décrit maintenant le dispositif de la figure 4, adapté à la transmission hydrostatique d'un engin à quatre roues motrices, respectivement désignées par les références 1, 2, 5 et 6. Les moteurs 10 et 20 sont analogues aux moteurs 10 et 20 précédemment décrits en référence aux figures 1 à 3 et l'on reconnaît leurs raccords principaux 10A, 10B, 10C et 20A, 20B, 20C, les raccords 10A et 20A étant respectivement reliés aux deux orifices 31 et 32 de la pompe par une ligne d'alimentation L31 et une ligne de retour de fluide L32, tandis que les raccords 10B et 20B sont directement reliés entre eux par une ligne de raccordement LB.

Le dispositif de la figure 4 comporte des moteurs 50 et 60 analogues aux moteurs 10 et 20 et comportant des premiers, deuxièmes et troisièmes raccords principaux, respectivement 50A, 50B, 50C et 60A, 60B, 60C. Les raccords 50A et 60A sont respectivement reliés aux orifices 31 et 32 de la pompe 30. Plus précisément, la conduite d'alimentation L31 se partage, au noeud N31, en deux branches respectivement L10A raccordée au raccord 10A et L50A raccordée au raccord 50A. De même, la conduite L32 provient d'un noeud N32 où se rejoignent deux branches, respectivement L20A reliée au raccord 20A et L60A reliée au raccord 60A. Les raccords 50B et 60B sont en liaison par une conduite de raccordement L'B.

Le circuit de la figure 4 comporte une pompe de gavage 35 alimentant une conduite de gavage 36. Les conduites LB et L'B sont reliées à cette conduite 36 par des branches 37 et 37' qui comportent des clapets anti-retour, 38 et 38', permettant seulement la circulation du fluide dans le sens allant de la pompe de gavage vers les conduites LB et L'B. Une pression minimum est ainsi maintenue dans les quatre moteurs du circuit. Comme indiqué précédemment, une limite supérieure de pression dans ces moteurs peut également être définie par la disposition sur les conduites de raccordement LB et L'B de deux soupapes de surpression (non représentées), une seule par conduite.

On peut en outre disposer de deux distributeurs à ouverture progressive, l'un entre la conduite LB et l'une des conduites L31 et L32, l'autre entre la conduite L'B et l'une des conduites L31 et L32 pour permettre, en virage, l'obtention de vitesses différentes entre les moteurs 10 et 20, et entre les moteurs 50 et 60.

Le circuit de la figure 4 comporte un sélecteur 140 à deux positions, respectivement 140A et 140B, et quatre voies numérotées de 141 à 144. La voie 141 est reliée en permanence à l'orifice 31 de la pompe, donc à la conduite d'alimentation, par une conduite de liaison L141, tandis que la voie 142 est reliée en permanence à l'orifice 32, donc à la conduite de retour de fluide, par une conduite de liaison L142. La voie 143 est reliée aux troisièmes raccords principaux 10C et 50C des moteurs 10 et 50 par une conduite de liaison L51C et ses dérivations, tandis que la voie 144 est reliée en permanence aux troisièmes raccords principaux 20C et 60C des moteurs 20 et 60 par une conduite de liaison L26C et ses branches de dérivation.

Dans sa première position 140A représentée sur la figure 4, correspondant à la position de travail, le sélecteur 140 met en communication les raccords 20C et 60C avec la ligne d'alimentation L31, les voies 141 et 144 étant reliées, de sorte que les deuxièmes moteurs élémentaires des moteurs 20 et 60 sont alimentés en parallèle avec les moteurs 10 et 50. Dans le même temps, les troisièmes raccords élémentaires 10C et 50C sont raccordés à la ligne de retour de fluide par la liaison des voies 142 et 143, de sorte que les deuxièmes moteurs élémentaires des moteurs 10 et 50 sont actifs en parallèle.

Il en résulte que, vis-à-vis de l'alimentation par la pompe 30, le dispositif comporte la cylindrée totale égale à la somme des cylindrées des moteurs 10 et 50 et des cylindrées des deuxièmes moteurs élémentaires des moteurs 20 et 60. Si tous les moteurs élémentaires ont la même cylindrée C, la cylindrée totale alimentée par la pompe est égale à 6C. Les premiers moteurs élémentaires des moteurs 20 et 60 sont alimentés en série avec les premiers moteurs élémentaires des moteurs 10 et 50, de sorte qu'on obtient une synchronisation entre les roues du véhicule.

Dans la deuxième position 140B du sélecteur 140 correspondant à la position de "vitesse", les voies 141 et 142 sont isolées, tandis que les voies 143 et 144 sont raccordées. De ce fait, les troisièmes raccords élémentaires 10C et 50C des moteurs 10 et 50 sont reliés aux troisièmes raccords élémentaires 20C et 60C des moteurs 20 et 60, de sorte que les deuxièmes moteurs élémentaires des moteurs 20 et 60 sont alimentés en série avec les deuxièmes moteurs élémentaires des moteurs 10 et 50. On obtient donc une configuration analogue à celle de la figure 3, dans laquelle les moteurs 20 et 60 sont entièrement raccordés en série aux moteurs 10 et 50. La cylindrée totale du dispositif vis-à-vis de l'alimentation par la pompe est donc seulement égale à la somme des cylindrées des moteurs 10 et 50 ce qui, si les cylindrées des moteurs élémentaires sont toutes égales à C, représente une cylindrée totale de 4C.

Bien que le sélecteur 140 représenté n'ait que deux positions, il pourrait avoir une troisième position, de grande vitesse, dans laquelle il mettrait en communication les voies 141 et 143 et, respectivement, les voies 142 et 144, de sorte que les deuxièmes moteurs élémentaires de chacun des moteurs seraient désactivés. Dans ce cas, la cylindrée totale vis-à-vis de l'alimentation par la pompe 30 serait égale à la somme des cylindrées des premiers moteurs élémentaires des moteurs 10 et 50 ce qui, si les cylindrées sont égales à C, représente seulement 2C.

Sur la figure 4, on constate que, quelle que soit la position des sélecteurs, les moteurs 10 et 50 (au moins leurs premiers moteurs élémentaires) sont alimentés en parallèle par la pompe, tandis que les premiers moteurs élémentaires des moteurs 20 et 60 sont alimentés en série par les premiers moteurs élémentaires du moteur 10 et 50. Il en résulte que, en fonction des conditions de circulation de l'engin, le débit du fluide délivré par la pompe peut se répartir de manière inégale entre les deux côtés de l'engin, ce qui favorise le comportement en virage, en autorisant les roues extérieures au virage à utiliser davantage de fluide que les roues intérieures au virage.

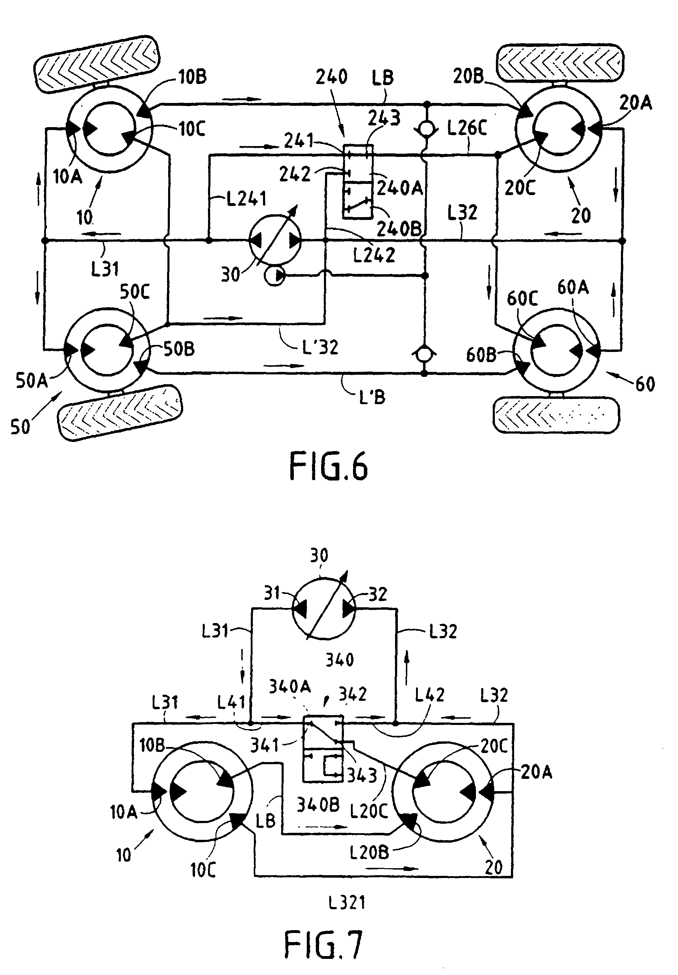

Le dispositif de la figure 5 est analogue à celui de la figure 4, à ceci près qu'il comporte un diviseur de débit 70 disposé dans la région du noeud N31 entre la conduite L31 et les conduites L10A et L50A. De ce fait, le débit de fluide passant dans la conduite L31 est réparti selon des fractions prédéterminées (en général égales) entre des moteurs 10 et 50, c'est-à-dire entre chacun des deux côtés du véhicule. Ceci permet d'éviter une perte de motricité de l'engin lorsque les organes de déplacement d'un côté de cet engin ont une adhérence insuffisante, puisque la fraction prédéterminée du fluide continuera de passer dans le moteur 10 ou 50 de l'autre côté de l'engin. Le diviseur de débit peut être progressif pour, dans un virage, permettre qu'un débit plus important soit affecté aux moteurs qui entraînent les organes de déplacement du côté extérieur au virage. Si ce n'est pas le cas, pour obtenir un débit plus important du côté extérieur au virage que du côté intérieur au virage, il est nécessaire de désactiver le diviseur de débit. Ceci peut être réalisé à l'aide d'un dispositif de sélection permettant d'inactiver les moteurs alimentés en série pour activer seulement des moteurs élémentaires alimentés en parallèle, pour chaque côté du véhicule. Ce dispositif de sélection peut être mis en place sur le sélecteur de l'invention qui serait alors doté d'une position supplémentaire.

Le circuit de la figure 6 est analogue à celui de la figure 4 mais comporte un sélecteur 240 différent du sélecteur 140. On reconnaît les moteurs 10, 20, 50 et 60, avec leurs raccords principaux. Ainsi, les premiers raccords principaux 10A et 50A des moteurs 10 et 50 sont reliés à la conduite d'alimentation de fluide L31, tandis que les premiers raccords principaux 20A et 60A des moteurs 20 et 60 sont reliés à la conduite de retour de fluide L32. Le sélecteur 240 comporte seulement trois voies, à savoir une première voie 241 reliée à la conduite d'alimentation de fluide L31 par une conduite de liaison L241, une deuxième voie 242 reliée à la conduite de retour de fluide L32 par une conduite de liaison L242 et une troisième voie 243 reliée aux troisièmes raccords principaux 20C et 60C des moteurs 20 et 60 par une conduite de liaison L26C à laquelle ces raccords sont reliés en parallèle. En revanche, les troisièmes raccords principaux 10C et 50C des moteurs 10 et 50 ne sont pas raccordés au sélecteur 240, mais sont directement raccordés en permanence à la conduite de retour de fluide par une conduite secondaire de retour de fluide L'32, à laquelle ces raccords sont reliés en parallèle. Ainsi, les deux moteurs élémentaires de chacun des moteurs 10 et 50 sont toujours actifs indépendamment de la position du sélecteur 240, par le retour direct à la conduite de retour de fluide des raccords 10C et 50C et par le retour des raccords 10B et 50B à la conduite de retour de fluide par l'intermédiaire des moteurs 20 et 60.

Dans sa première position 240A représentée sur la figure 6, le sélecteur 240 raccorde les deuxièmes raccords élémentaires 20C et 60C des moteurs 20 et 60 à la conduite d'alimentation de fluide L31 par la liaison des voies 241 et 243, tandis que la voie 242 est isolée. Le mode de fonctionnement est alors analogue à celui de la figure 4 dans laquelle le sélecteur 140 occupe sa position 140A correspondant à la position de travail.

Dans sa deuxième position 240B, correspondant à la position de vitesse, le sélecteur 240 isole la voie 241, tandis que les raccords 20C et 60C des moteurs 20 et 60 sont reliés à la conduite de retour de fluide L32 par la liaison des voies 242 et 243. Dans ce cas, les deuxièmes moteurs élémentaires des moteurs 20 et 60 sont désactivés, puisque les raccords 20A et 20C, de même que les raccords 60A et 60C sont mis à la même pression en étant reliés à la conduite de retour de fluide. Dans ce cas, la cylindrée totale vis-à-vis de l'alimentation par la pompe 30 est égale seulement à la somme des cylindrées 10 et 50, comme c'était le cas pour la position 140B du sélecteur 140 de la figure 4.

Ce sélecteur à trois voies peut également s'appliquer à un circuit ayant seulement deux moteurs comme le montre la figure 7. Sur cette figure, on reconnaît les moteurs 10 et 20 des figures 1 à 3. Leurs premiers raccords principaux 10A et 20A sont respectivement reliés aux conduites d'alimentation de fluide et de retour de fluide, L31 et L32. Leurs deuxièmes raccords principaux 10B et 20B sont reliés entre eux par la conduite de raccordement LB. Toutefois, le troisième raccord principal 10C du moteur 10 est relié à la conduite de retour de fluide L32 par une conduite de raccordement L321. Ainsi, comme dans le cas de la figure 6, les deux moteurs élémentaires du moteur 10 sont toujours actifs quelle que soit la position du sélecteur 340, puisque ces raccords 10A et 10B, d'une part et 10A et 10C, d'autre part, sont mis à des pressions différentes.

Le sélecteur 340 comporte seulement trois voies, respectivement une première voie 341 reliée à la conduite d'alimentation L31 par une conduite de liaison L41, une deuxième voie 342 reliée à la conduite de retour de fluide par une conduite de liaison L42, et une troisième voie 343 reliée au troisième raccord principal 20C du moteur 20 par une conduite de liaison L20C. Dans la première position 340A du sélecteur 340, le raccord 20C est relié à la conduite d'alimentation L31 par la liaison des voies 341 et 343, tandis que la voie 342 est isolée. Le raccord 10C est quant à lui raccordé en permanence à la conduite de liaison L32, la situation est la même que dans la position 40A (position de travail) du sélecteur 40 de la figure 1.

En revanche, dans la deuxième position 340B du sélecteur 340, les voies 342 et 343 sont reliées, de sorte que le raccord principal 20C est placé à la même pression que le raccord principal 20A, ce qui inactive le deuxième moteur élémentaire du moteur 20. Dans ce cas, la cylindrée totale du dispositif vis-à-vis de l'alimentation par la pompe est la même que dans la position 40C (position de vitesse) du sélecteur 40 de la figure 3.

## Revendications

1. Dispositif de transmission pour deux organes de déplacement d'un engin disposés l'un à la suite de l'autre dans le sens de déplacement dudit engin, le dispositif comprenant une pompe hydraulique (30) ainsi qu'un premier et un deuxième moteur hydraulique (10, 20 ; 50, 60), auxquels sont respectivement attelés les premier et deuxième organes de déplacement, lesdits moteurs hydrauliques étant des moteurs doubles qui comprennent chacun deux moteurs élémentaires (11, 12, 21, 22), chaque moteur élémentaire ayant un premier et un deuxième raccord élémentaire, d'alimentation ou d'échappement, les premiers raccords élémentaires étant mis en commun pour former un premier raccord principal du moteur double (10A, 20A, 50A, 60A), tandis que les deuxièmes raccords élémentaires sont séparés et forment respectivement des deuxième et troisième raccords principaux (10B, 10C, 20B, 20C, 50B, 50C, 60B, 60C) du moteur double, le premier raccord principal (10A, 50A) du premier moteur hydraulique (10, 50) étant raccordé à une conduite (L31) d'alimentation en fluide provenant de la pompe (30) et le premier raccord principal (20A, 60A) du deuxième moteur hydraulique (20, 60) étant raccordé à une conduite de retour de fluide (L32), les deuxièmes raccords principaux (10B, 20B; 50B, 60B) des premier et deuxième moteurs hydrauliques (10, 20, 50, 60) étant reliés entre eux par une conduite de raccordement (LB, L'B), le dispositif comprenant, en outre, un sélecteur (40 ; 140 ; 240 ; 340) à au moins deux positions (40A, 40B, 40C ; 140A, 140B ; 240A, 240B; 340A, 340B), raccordé à ladite conduite d'alimentation en fluide (L31), à ladite conduite de retour de fluide (L32) et au troisième raccord principal (20C, 60C) du deuxième moteur hydraulique (20 ; 60),
**caractérisé en ce que** le troisième raccord principal (10C, 50C) du premier moteur hydraulique (10 ; 50) est relié soit au sélecteur (40 ; 140 ; 240) soit directement à la même conduite que le premier raccord principal (20A) du deuxième moteur (20, 60) et **en ce que** le sélecteur a une position de travail (40A ; 140A ; 240A ; 340A) dans laquelle les deux moteurs hydrauliques (10, 20, 50, 60) présentent, considérés ensemble vis-à-vis de leur alimentation en fluide (L31) par la pompe (30), une première cylindrée totale, et une position de vitesse (40B, 40C ; 140B ; 240B ; 340B) dans laquelle les deux moteurs hydrauliques présentent, considérés ensemble vis-à-vis de leur alimentation en fluide par la pompe, une deuxième cylindrée totale inférieure à ladite première cylindrée totale.

2. Dispositif selon la revendication 1, **caractérisé en ce que** le sélecteur présente une position de travail (40A) dans laquelle le troisième raccord principal (10C) du premier moteur (10) est raccordé à la conduite de retour de fluide (L32) tandis que le troisième raccord principal (20C) du deuxième moteur (20) est raccordé à la conduite d'alimentation en fluide (L31) et une position de grande vitesse (40B) dans laquelle le troisième raccord principal (10C) du premier moteur (10) est raccordé à la conduite d'alimentation en fluide (L31), tandis que le troisième raccord principal (20C) du deuxième moteur (20) est raccordé à la conduite de retour de fluide (L32).

3. Dispositif selon la revendication 1 ou 2, **caractérisé en ce que** le sélecteur présente une position de travail (40A ; 140A) dans laquelle le troisième raccord principal (10C ; 50C) du premier moteur (10 ; 50) est raccordé à la conduite de retour de fluide (L32) tandis que le troisième raccord principal (20C ; 60C) du deuxième moteur (20 ; 60) est raccordé à la conduite d'alimentation en fluide (L31) et une position de moyenne vitesse (40C ; 140C) dans laquelle le troisième raccord principal (10C ; 50C) du premier moteur (10, 50) est raccordé au troisième raccord principal (20C ; 60C) du deuxième moteur (20, 60).

4. Dispositif selon la revendication 1, **caractérisé en ce que** le troisième raccord principal (10C, 50C) est relié en permanence à la conduite de retour de fluide (L32) et **en ce que** le sélecteur (240, 340) présente une position de travail (240A, 340A) dans laquelle le troisième raccord principal (20C, 60C) du deuxième moteur (20, 60) est raccordé à la conduite d'alimentation en fluide (L31) et une position de vitesse supérieure (240B, 340B) dans laquelle le troisième raccord principal (20C, 60C) du deuxième moteur (20, 60) est raccordé à la conduite de retour de fluide (L32).

5. Dispositif selon l'une quelconque des revendications 1 à 4, **caractérisé en ce que** les deux moteurs hydrauliques (10, 20, 50, 60) présentent des cylindrées sensiblement égales et sont aptes à entraîner à la même vitesse des organes de déplacement présentant sensiblement le même développement.

6. Dispositif selon l'une quelconque des revendications 1 à 5, **caractérisé en ce qu'**il comporte des moyens (38, 38') pour respecter une limite inférieure et une limite supérieure de pression dans la conduite de raccordement (LB, L'B) entre les deuxièmes raccords principaux (10B, 20B ; 50B, 60B) des premier et deuxième moteurs (10, 20, 50, 60).

7. Dispositif selon l'une quelconque des revendications 1 à 6, dans lequel les deux moteurs (10, 20) sont destinés à l'entraînement de deux organes de déplacement (1, 2) situés d'un côté de l'engin, **caractérisé en ce qu'**il comporte, en outre, un troisième et un quatrième moteur hydraulique (50, 60), qui sont respectivement analogues au premier et au deuxième moteur (10, 20) et qui sont destinés à l'entraînement de deux organes de déplacement (5, 6) situés de l'autre côté de l'engin, **en ce que** le premier raccord principal (50A) du troisième moteur (50) est raccordé à la conduite d'alimentation en fluide (L31) en parallèle avec le premier raccord principal (10A) du premier moteur (10), le premier raccord principal du quatrième moteur (60A) est raccordé à la conduite de retour de fluide (L32) en parallèle avec le premier raccord principal (20A) du deuxième moteur (20), les deuxièmes raccords principaux (50B, 60B) des troisième et quatrième moteurs (50, 60) sont directement reliés entre eux, et les troisièmes raccords principaux (50C, 60C) des troisième et quatrième moteurs (50, 60) sont reliés au sélecteur (140), respectivement en parallèle avec le troisième raccord principal (10C) du premier moteur (10) et en parallèle avec le troisième raccord principal (20C) du deuxième moteur (20).

8. Dispositif selon la revendication 7, **caractérisé en ce qu'**il comporte un diviseur de débit (70), disposé sur la conduite principale d'alimentation (L31), entre le premier raccord (10A) du premier moteur (10) et le premier raccord (50A) du troisième moteur (50) et destiné à répartir entre lesdits raccords le débit de fluide circulant dans la conduite principale d'alimentation.

9. Dispositif selon l'une quelconque des revendications 1 à 7, **caractérisé en ce que** la pompe hydraulique (30) est une pompe à débit variable ayant deux orifices (31, 32) et **en ce que** la conduite d'alimentation en fluide (L31) et la conduite de retour de fluide (L32) sont respectivement raccordées à chacun des deux orifices de la pompe, le dispositif ayant ainsi une configuration de circuit fermé.

## Patentansprüche

1. Übertragungsvorrichtung für zwei, in Bewegungsrichtung einer Maschine hintereinandergeschaltete Fortbewegungsorgane der Maschine,
umfassend eine Hydraulikpumpe (30) sowie einen ersten und einen zweiten Hydraulikmotor (10, 20; 50, 60), an die die ersten bzw. zweiten Fortbewegungsorgane angekuppelt sind, wobei die Hydraulikmotoren Doppelmotoren sind, die jeweils zwei Elementarmotoren (11, 12, 21, 22) umfassen, wobei jeder Elementarmotor einen ersten und einen zweiten Elementaranschluß zur Zuleitung oder Ableitung aufweist, wobei die ersten Elementaranschlüsse zusammengefaßt sind, um einen ersten Hauptanschluß (10A, 20A, 50A, 60A) des Doppelmotors zu bilden, während die zweiten Elementaranschlüsse getrennt sind und jeweils zweite bzw. dritte Hauptanschlüsse (10B, 10C, 20B, 20C, 50B, 50C, 60B, 60C) des Doppelmotors bilden, wobei der erste Hauptanschluß (10A, 50A) des ersten Hydraulikmotors (10, 50) an eine Zuleitung (L31) von Fluid, das von der Pumpe (30) kommt, angeschlossen ist, und der erste Hauptanschluß (20A, 60A) des zweiten Hydraulikmotors (20, 60) an eine Rückleitung (L32) für Fluid angeschlossen ist, wobei die zweiten Hauptanschlüsse (10B, 20B; 50B, 60B) der ersten und zweiten Hydraulikmotoren (10, 20, 50, 60) miteinander durch eine Verbindungsleitung (LB, L'B) verbunden sind, wobei die Vorrichtung ferner einen Wähler (40; 140; 240; 340) mit mindestens zwei Positionen (40a, 40B, 40C; 140A, 140B; 240A, 240B; 340A, 340B) umfaßt, der an die Fluidzuleitung (L31), an die Fluidrückleitung (L32) und an den dritten Hauptanschluß (20C, 60C) des zweiten Hydraulikmotors (20; 60) angeschlossen ist,
**dadurch gekennzeichnet, daß** der dritte Hauptanschluß (10C, 50C) des ersten Hydraulikmotors (10; 50) entweder an den Wähler (40; 140; 240) oder direkt an dieselbe Leitung wie der erste Hauptanschluß (20A) des zweiten Motors (20, 60) angeschlossen ist, und daß der Wähler eine Arbeitsposition (40A; 140A, 240A; 340A) aufweist, in der die beiden Hydraulikmotoren (10, 20, 50, 60), im Verhältnis zu ihrer Fluidversorgung (L31) durch die Pumpe (30) gemeinsam betrachtet, einen ersten Gesamthubraum aufweisen, und eine Geschwindigkeitsposition (40B, 40C; 140B; 240B; 340B) aufweist, in der die beiden Hydraulikmotoren, im Verhältnis zu ihrer Fluidversorgung durch die Pumpe gemeinsam betrachtet, einen zweiten Gesamthubraum aufweisen, der kleiner als der erste Gesamthubraum ist.

2. Vorrichtung nach Anspruch 1, **dadurch gekennzeichnet, daß** der Wähler eine Arbeitsposition (40A) aufweist, in der der dritte Hauptanschluß (10C) des ersten Motors (10) an die Fluidrückleitung (L32) angeschlossen ist, während der dritte Hauptanschluß (20C) des zweiten Motors (20) an die Fluidzuleitung (L31) angeschlossen ist, und eine Hochgeschwindigkeitsposition (40B) aufweist, in der der dritte Hauptanschluß (10C) des ersten Motors (10) an die Fluidzuleitung (L31) angeschlossen ist, während der dritte Hauptanschluß (20C) des zweiten Motors (20) an die Fluidrückleitung (L32) angeschlossen ist.

3. Vorrichtung nach Anspruch 1 oder 2, **dadurch gekennzeichnet, daß** der Wähler eine Arbeitsposition (40A; 140A) aufweist, in der der dritte Hauptanschluß (10C; 50C) des ersten Motors (10; 50) an die Fluidrückleitung (L32) angeschlossen ist, während der dritte Hauptanschluß (20C; 60C) des zweiten Motors (20; 60) an die Fluidzuleitung (L31) angeschlossen ist, und eine Durchschnittsgeschwindigkeitsposition (40C; 140C) aufweist, in der der dritte Hauptanschluß (10C; 50C) des ersten Motors (10, 50) an den dritten Hauptanschluß (20C; 60C) des zweiten Motors (20, 60) angeschlossen ist.

4. Vorrichtung nach Anspruch 1, **dadurch gekennzeichnet, daß** der dritte Hauptanschluß (10C, 50C) ständig an die Fluidrückleitung (L32) angeschlossen ist, und daß der Wähler (240, 340) eine Arbeitsposition (240A, 340A) aufweist, in der der dritte Hauptanschluß (20C, 60C) des zweiten Motors (20, 60) an die Fluidzuleitung (L31) angeschlossen ist, und eine obere Geschwindigkeitsposition (240B, 340B) aufweist, in der der dritte Hauptanschluß (20C, 60C) des zweiten Motors (20, 60) an die Fluidrückleitung (L32) angeschlossen ist.

5. Vorrichtung nach einem der Ansprüche 1 bis 4, **dadurch gekennzeichnet, daß** die beiden Hydraulikmotoren (10, 20, 50, 60) im wesentlichen gleiche Hubräume aufweisen und Fortbewegungsorgane, die im wesentlichen dieselbe Abwicklungslänge aufweisen, mit derselben Geschwindigkeit antreiben können.

6. Vorrichtung nach einem der Ansprüche 1 bis 5, **dadurch gekennzeichnet, daß** sie Mittel (38, 38') umfaßt, um eine untere Grenze und eine obere Grenze für den Druck in der Anschlußleitung (LB, L'B) zwischen den zweiten Hauptanschlüssen (10B, 20B, 50B, 60B) der ersten und zweiten Motoren (10, 20, 50, 60) einzuhalten.

7. Vorrichtung nach einem der Ansprüche 1 bis 6, bei der die beiden Motoren (10, 20) für den Antrieb von zwei Fortbewegungsorganen (1, 2) bestimmt sind, die sich auf einer Seite der Maschine befinden, **dadurch gekennzeichnet, daß** sie ferner einen dritten und einen vierten Hydraulikmotor (50, 60) umfaßt, die jeweils analog zu den ersten und den zweiten Motoren (10, 20) sind und die für den Antrieb von zwei Fortbewegungsorganen (5, 6), die auf der anderen Seite der Maschine angeordnet sind, bestimmt sind, daß der erste Hauptanschluß (50A) des dritten Motors (50) parallel mit dem ersten Hauptanschluß (10A) des ersten Motors (10) an die Fluidzuleitung (L31) angeschlossen ist, der erste Hauptanschluß (60A) des vierten Motors parallel mit dem ersten Hauptanschluß (20A) des zweiten Motors (20) an die Fluidrückleitung (L32) angeschlossen ist, die zweiten Hauptanschlüsse (50B, 60B) der dritten und vierten Motoren (50, 60) direkt miteinander verbunden sind und die dritten Hauptanschlüsse (50C, 60C) der dritten und vierten Motoren (50, 60) parallel mit dem dritten Hauptanschluß (10C) des ersten Motors (10) bzw. parallel mit dem dritten Hauptanschluß (20C) des zweiten Motors (20) an den Wähler (140) angeschlossen sind.

8. Vorrichtung nach Anspruch 7, **dadurch gekennzeichnet, daß** sie einen Durchflußteiler (70) umfaßt, der in der Hauptzuleitung (L31) zwischen dem ersten Anschluß (10A) des ersten Motors (10) und dem ersten Anschluß (50A) des dritten Motors (50) angeordnet und dazu bestimmt ist, die in der Hauptzuleitung zirkulierende Fluidmenge zwischen den Anschlüssen zu verteilen.

9. Vorrichtung nach einem der Ansprüche 1 bis 7, **dadurch gekennzeichnet, daß** die Hydraulikpumpe (30) eine Pumpe mit variabler Förderleistung mit zwei Öffnungen (31, 32) ist, und daß die Fluidzuleitung (L31) und die Fluidrückleitung (L32) jeweils an jede der beiden Öffnungen der Pumpe angeschlossen sind, wodurch die Vorrichtung somit die Konfiguration eines geschlossenen Kreislaufs aufweist.

## Claims

1. Transmission apparatus for two vehicle displacement members disposed one behind the other in the direction of displacement of said vehicle, the apparatus including a hydraulic pump (30) and first and second hydraulic motors (10, 20; 50, 60) to which the first and second displacement members are respectively coupled, said hydraulic motors being dual-capacity motors, each of which comprises two elementary motors (11, 12, 21, 22), each elementary motor having first and second elementary connections, for feed or discharge purposes, the first elementary connections being put in common to form a first main connection of the dual-capacity motor (10A, 20A, 50A, 60A), while the second elementary connections are separate and form respectively second and third main connections (10B, 10C, 20B, 20C, 50B, 50C, 60B, 60C) of the dual-capacity motor, the first main connection (10A, 50A) of the first hydraulic motor (10, 50) being connected to a fluid feed duct (L31) coming from the pump (30) and the first main connection (20A, 60A) of the second hydraulic motor (20, 60) being connected to a fluid return duct (L32), the second main connections (10B, 20B; 50B, 60B) of the first and second hydraulic motors (10, 20, 50, 60) being interconnected via an interconnection duct (LB, L'B), the apparatus further including a selector (40; 140; 240; 340) having at least two positions (40A, 40B, 40C; 140A, 140B; 240A, 240B; 340A, 340B), and connected to said fluid feed duct (L31), to said fluid return duct (L32) and to the third main connection (20C, 60C) of the second hydraulic motor (20; 60),
the apparatus being **characterised in that** the third main connection (10C, 50C) of the first hydraulic motor (10; 50) is either connected to the selector (40; 140; 240) or directly to the same duct as the first main connection (20A) of the second motor (20, 60) and **in that** the selector has a high-torque position (40A; 140A; 240A; 340A) in which both hydraulic motors (10, 20, 50, 60) when considered together with respect to their being fed with fluid (L31) by the pump (30) present a first total cylinder capacity, and a high-speed position (40B, 40C; 140B; 240B; 340B) in which both hydraulic motors when considered together with respect to how they are fed with fluid by the pump present a second total cylinder capacity smaller than said first total cylinder capacity.

2. Apparatus according to claim 1, **characterised in that** the selector has a high-torque position (40A) in which the third main connection (10C) of the first motor (10) is connected to the fluid return duct (L32) while the third main connection (20C) of the second motor (20) is connected to the fluid feed duct (L31), and a high speed position (40B) in which the third main connection (10C) of the first motor (10) is connected to the fluid feed duct (L31), while the third main connection (20C) of the second motor (20) is connected to the fluid return duct (L32).

3. Apparatus according to claim 1 or 2, **characterised in that** the selector has a high-torque position (40A; 140A) in which the third main connection (10C; 50C) of the first motor (10; 50) is connected to the fluid return duct (L32) while the third main connection (20C; 60C) of the second motor (20; 60) is connected to the fluid feed duct (L31) and a medium speed position (40C; 140C) in which the third main connection (10C; 50C) of the first motor (10, 50) is connected to the third main connection (20C; 60C) of the second motor (20, 60).

4. Apparatus according to claim 1, **characterised in that** the third main connection (10C, 50C) is connected continuously to the fluid return duct (L32), and **in that** the selector (240, 340) has a high-torque position (240A, 340A) in which the third main connection (20C, 60C) of the second motor (20, 60) is connected to the fluid feed duct (L31), and a top speed position (240B, 340B) in which the third main connection (20C, 60C) of the second motor (20, 60) is connected to the fluid return duct (L32).

5. Apparatus according to any one of claims 1 to 4, **characterised in that** the two hydraulic motors (10, 20, 50, 60) have cylinder capacities that are substantially equal, and are suitable for driving displacement members having substantially the same development at the same speed.

6. Apparatus according to any one of claims 1 to 5, **characterised in that** it includes means (38, 38') for satisfying a bottom pressure limit and a top pressure limit in the interconnection duct (LB, L'B) between the two main connections (10B, 20B, 50B, 60B) of the first and second motors (10, 20, 50, 60).

7. Apparatus according to any one of claims 1 to 6, in which the two motors (10, 20) serve to drive two displacement members (1, 2) situated on one side of the vehicle, said apparatus being **characterised in that** it further includes third and fourth hydraulic motors (50, 60) which are respectively analogous to the first and second motors (10, 20) and which serve to drive two displacement members (5, 6) situated on the other side of the vehicle, **in that** the first main connection (50A) of the third motor (50) is connected to the fluid feed duct (L31) in parallel with the first main connection (10A) of the first motor (10), the first main connection of the fourth motor (60A) is connected to the fluid return duct (L32) in parallel with the first main connection (20A) of the second motor (20), the second main connections (50B, 60B) of the third and fourth motors (50, 60) are interconnected directly, and the third main connections (50C, 60C) of the third and fourth motors (50, 60) are connected to the selector (140), respectively in parallel with the third main connection (10C) of the first motor (10), and in parallel with the third main connection (20C) of the second motor (20).

8. Apparatus according to claim 7, **characterised in that** it includes a flow-rate divider (70) disposed on the main feed duct (L31) between the first connection (10A) of the first motor (10) and the first connection (50A) of the third motor (50) and serving to distribute the flow rate of the fluid flowing through the main feed duct between said connections.

9. Apparatus according to any one of claims 1 to 7, **characterised in that** the hydraulic pump (30) is a pump having a variable flow rate and two ports (31, 32), and **in that** the fluid feed duct (L31) and the fluid return duct (L32) are connected to respective ones of the two ports of the pump, the apparatus thus having a closed-circuit configuration.
